# EUROPEAN PATENT APPLICATION

(11) **EP 4 276 687 A1**
(43) Date of publication of application: **15.11.2023**
(21) Application number: 22305718.3
(22) Date of filing: 13.05.2022
(51) Int. Cl.: G06K 19/077

(54) **RSIM STAND ALONE MANUFACTURING AT MICROELECTRONIC STEP**

(71) Applicant: Thales Dis France SAS, 92190 Meudon (FR)
(72) Inventor: DOSSETTO, Lucile, 83270 SAINT CYR SUR MER (FR); OTTOBON, Stéphane, 83270 SAINT CYR SUR MER (FR); AUDOUARD, Laurent, 13400 AUBAGNE (FR); ROBERTET, Laurence, 13400 AUBAGNE (FR)
(74) Representative: Castelo, Jérôme

(57) **Abstract**

A method of manufacturing a smart card (1) such as a SIM card extending along an extension direction (E) comprises the steps of providing at least one reel tape (2) extending along a longitudinal direction (L), and providing a plurality of electronic chips (3) on the reel tape (2). The reel tape (2) comprises at least one electrically conductive layer (4) and at least one dielectric layer (5). The electronic chips (3) are in connection with the electrically conductive layer (4) of the reel tape (2). The method further comprises the step of laminating at least a first card body layer in reel (7) to the reel tape (2) and laminating at least a second card body layer in reel (8) to the first card body layer (7). The first card body layer (7) at least partially embeds the electronic chips (3), and the second card body layer (8) covers the electronic chips (3) towards an outside.

## Description

### TECHNICAL FIELD

The present invention relates to a method of manufacturing a smart card such as a SIM card according to claim 1.

### PRIOR ART

Current methods of manufacturing smart cards such as Subscriber Identity Module (SIM) cards involve a lot of manufacturing steps such as module assembly, card molding, embedding of the module in the smart card, printing of the smart card, etc. Furthermore, the manufacturing typically requires a lot of material. For instance, in order to generate a smart card in a small format such as 2FF, 3FF or 4FF, a smart card in a large format such as 1FF is produced in a first step and which is thereafter reduced into the smaller formats, wherein only a part of the originally large card is used and a lot of material is discarded. These processes are not environment friendly and costly.

### SUMMARY OF THE INVENTION

It is an object of the present invention to provide a method of manufacturing a smart card that overcomes the drawback of the prior art. In particular, it is an object to provide a method of manufacturing a smart card that requires fewer material and is less costly.

This object is achieved with a method according to claim 1. In particular, a method of manufacturing a smart card such as a SIM card extending along an extension direction is provided. The method comprises the steps of providing at least one reel tape extending along a longitudinal direction, and providing a plurality of electronic chips on the reel tape. The reel tape comprises at least one electrically conductive layer and at least one dielectric layer. The electronic chips are in connection with the electrically conductive layer of the reel tape. The method further comprises the steps of laminating at least a first card body layer in reel to the reel tape and laminating at least a second card body layer in reel to the first card body layer. The first card body layer at least partially embeds the electronic chips. The second card body layer covers the electronic chips towards an outside.

Thus, a plurality of electronic chips are provided on the reel tape, and wherein said electronic chips are at least partially arranged in the first card body layer and the second card body layer. In other words, the first card body layer and the second card body layer preferably at least partially surround the electronic chips. The first card body layer and the second card body layer preferably constitute a card body of the final smart card as it is known in the card industry. Hence, the present invention is based on the insight that the final smart card can be directly assembled in reel, wherein fewer method steps are required since steps such as embedding and printing steps are avoided and a material consumption is reduced since the manufacturing of a large smart card such as the 1FF smart card and a subsequent reduction to a smaller smart card is dispensed with. In fact, since less material is required such as less polymer, adhesive, ink, etc. as typically required in the manufacturing of smart cards the method according to the present invention is more environment friendly and cost effective. It furthermore allows to reduce the transport CO₂ costs as the smart card in reel has a much lighter weight.

The extension direction of the smart card extends from a bottom side of the smart card towards a top side of the smart card. In other words, the extension direction can be seen as a vertical direction of the smart card. In the present case, the electrically conductive layer of the reel tape preferably provides the top side of the smart card and the second card body layer preferably provides the bottom side of the smart card.

With respect to the extension direction of the smart card the dielectric layer is preferably arranged below the electrically conductive layer, the first card body layer is arranged below the dielectric layer, and the second card body layer is arranged below the first card body layer.

The second card body layer covering the electronic chips towards an outside means that the second card body layer is arranged below the electronic chips with respect to the extension direction of the smart card. Since the second card body layer is laminated to the first card body layer the second card body layer is preferably arranged at least everywhere where the first card body layer is present. In other words, the second card body layer preferably covers the first card body layer.

The electrically conductive layer is preferably arranged by separated contacts and is particularly preferably configured to establish an electrical connection with a smart card contact connector respecting, for instance, an ISO standard. The electrically conductive layer preferably is a copper layer with Nickel Gold plating on it and the separation of the contacts can be by etching the electrically conductive copper layer or by stamping or the like as it is known in the art.

The electronic chip preferably is an electronic chip that is well-known in the art and/or that is commercially available. The electronic chip is preferably configured for applications in the SIM card marked or the banking market or the identity market.

The first card body layer is preferably laminated onto the dielectric layer of the reel tape. To this end the first card body layer can be laminated directly onto the dielectric layer in the absence of an adhesive element. Alternatively, the first card body layer can be laminated indirectly onto the dielectric layer via at least a first adhesive element.

Likewise, the second card body layer can be laminated directly onto the first card body layer in the absence of an adhesive element. Alternatively, the second card body layer can be laminated indirectly onto the first card body layer via at least a second adhesive element.

The first adhesive element and the second adhesive element can correspond to an adhesive as it is known in the field of the art, e.g. to glue. However, especially in the event that the first and/or second card body layer are so-called pre-preg layers, see below, the provision of an adhesive element can be dispensed with since the pre-preg material of such layers are tacky (so-called B-stage state), see also below.

To this end it is preferred that the first card body layer and the second card body layer in each case define an upper surface and an opposed lower surface. Likewise, the dielectric layer and the electrically conductive layer of the reel tape in each case preferably define an upper surface and an opposed lower surface as well. Hence, when seen along the extension direction, it is particularly preferred that the lower surface of the second card body layer is laminated (optionally via an adhesive element) to the upper surface of the first card body layer, and that the lower surface of the first card body layer is laminated (optionally via an adhesive element) to the upper surface of the dielectric layer of the reel tape.

The first card body layer preferably comprises a plurality of apertures that are arranged along the longitudinal direction of the reel tape, and wherein in each case one of the electronic chips is arranged in one of the apertures of the first card body layer.

The second card body layer preferably is a continuous layer that continuously extends along the longitudinal direction of the reel tape.

The first adhesive element and/or the second adhesive element, if present, can be provided as a layer that continuously extends along the longitudinal direction of the reel tape. Alternatively, the first adhesive element and/or the second adhesive element, if present, can be provided as an intermittent layer that comprise a plurality of apertures being arranged along the longitudinal direction of the reel tape. The apertures of the first adhesive element and/or of the second adhesive element are preferably arranged at least partially congruent with the apertures of the first card body layer when seen along the extension direction of the smart card.

A continuous layer is understood as a layer that does not comprise any apertures or the like.

The apertures in the first card body layer and, if present, in the first adhesive element are preferably generated by punching.

It is furthermore preferred that the apertures in the first card body layer and, if present, in the first adhesive element are generated before the lamination of the first card body layer to the reel tape. That is, it is preferred to apply the first adhesive element to the lower surface of the first card body layer in a first step, to then punch the apertures into the first adhesive element as well as into the first card body layer in a second step, and to then laminate said punched first card body layer and first adhesive element to the upper surface of the dielectric layer of the reel tape.

However, and as mentioned, the first adhesive element must not necessarily comprise apertures but could be provided as a continuous layer instead. In this case, the first adhesive element preferably extends across the apertures of the first card body layer when seen along the longitudinal direction of the reel tape, i.e. the first adhesive element can be said to span the apertures of the first card body layer.

The first card body layer and/or the second card body layer can comprise or consist of at least one polymer and/or at least one paper-based compound. The polymer preferably is a thermoplastic polymer and/or a transparent polymer. The at least one polymer particularly preferably is polyvinylchloride, polycarbonate, a polyester such as an amorphous polyester, a co-polyester, or a semi-crystalline polyester and preferably polyethylene terephthalate or naphthalate (PEN), or polylactic acid (PLA), or acrylonitrile butadiene styrene (ABS). The polymer particularly preferably is a recycled polymer such as recycled polyvinyl chloride (rPVC), recycled polycarbonate, or recycled polyethylene terephthalate (rPET), etc. The paper-based compound preferably is paper.

Alternatively, it is likewise preferred that the first card body layer and/or the second card body layer comprises or consists of pre-impregnated fibers and a partially cured polymer matrix when being laminated to the reel tape. That is, the first card body layer and/or the second card body layer can likewise be so-called pre-pregs, i.e. a composite material comprising "pre-impregnated" fibers and a partially cured polymer matrix, such as epoxy or phenolic resin, or even thermoplastic mixed with liquid rubbers or resins. Hence, the first and/or second card body layer being pre-peg layers are not completely polymerized layers when being laminated onto the reel tape. The card body layer(s) being pre-preg layers have the advantage of being tacky. As such, the provision of an adhesive element for lamination can be dispensed with, see above. A complete polymerization of the pre-preg layer(s) is preferably accomplished at the end of the lamination of these card body layers and before the singulation, see further below. The complete polymerization of the card body layers is preferably done by baking, i.e. by heating these layers in order to cross-link the polymer(s). In particular, it is preferred to apply a temperature during a period of time, and wherein the temperature is kept constant or varied.

However, it should be noted that the card body layers can comprise or consist of many other compounds than just those mentioned above. In fact, conceivable materials for the first and second card body layers are those that can be laminated to the reel tape and which fulfil further criteria of the smart card industry such as a particular maximal thicknesses.

The first card body layer and the second card body layer can be the same or different from one another. For instance, the first card body layer could be a pre-peg layer and the second card body layer could be a rPVC layer.

The electrically conductive layer of the reel tape preferably is a continuous layer that continuously extends along the longitudinal direction of the reel tape.

The dielectric layer of the reel tape can be a continuous layer that continuously extends along the longitudinal direction of the reel tape. Alternatively, the dielectric layer of the reel tape can be an intermittent layer that comprises a plurality of apertures being arranged along the longitudinal direction of the reel tape.

That is, both the electrically conductive layer as well as the dielectric layer of the reel tape can be provided as continuous layers that do not comprise any apertures or the like.

However, it is likewise conceivable that the dielectric layer comprises apertures that are arranged along the longitudinal direction of the reel tape. In this case it is particularly preferred that the apertures of the dielectric layer are at least partially arranged congruent with the apertures of the first card body layer when seen along the extension direction of the smart card. Being at least partially congruent means that the apertures of the dielectric layer are at least partially at a same location as the apertures of the first card body layer with respect to a transverse direction extending perpendicularly to the extension direction. Again in other words, by defining the extension direction with the vertical direction and the transverse direction with a horizontal direction of the smart card, the apertures of the first card body layer and the apertures of the dielectric layer are preferably arranged at least partially at a same horizontal location, whereas their vertical locations with respect to the vertical direction of the smart card are staggered.

The electronic chips are preferably arranged on the electrically conductive layer of the reel tape and preferably furthermore at least partially within apertures of the dielectric layer. Alternatively, the electronic chips are preferably arranged on the dielectric layer of the reel tape. That is, in the event that the dielectric layer of the reel tape is a continuous layer it is preferred that the electronic chips are arranged on said dielectric layer, in particular on the upper surface of the dielectric layer. However, in the event that the dielectric layer is an intermitted layer, it is preferred that the electronic chips are arranged on the electrically conductive layer as well as within the apertures of the dielectric layer.

In any case it is preferred that the electronic chips are connected to the reel tape, either to the dielectric layer or to the electrically conductive layer, via at least one adhesive element such as glue. That is, the electronic chips can be glued to the electrically conductive layer or to the dielectric layer of the reel tape.

The electronic chips can be electrically connected to the electrically conductive layer of the reel tape before or after lamination of the first card body layer to the reel tape. The electronic chips are preferably electrically connected to the electrically conductive layer of the reel tape via wire bonding or in a flip chip process.

Hence, various ways of electrically connecting the electronic chips to the electrically conductive layer of the reel tape are conceivable. For instance, electrically conductive wires such as Au, Ag, or Cu wires could be used to electrically connect the electronic chips in a wired manner to the conductive layer of the reel tape. Alternatively, an assembly of the electronic chips could be done in a flip chip process, wherein a bumping of the electronic chips is performed in a first step, wherein a picking and placing "face-down" of the bumped electronic chips to a substrate or a board, here to the reel tape and for instance to the electrically conductive layer of the reel tape is performed in a second step, wherein an attachment of the electronic chips with an adhesive element such as a non-conductive glue or an anisotropic conductive plate is performed in a third step, and wherein a curing is performed in a fourth step.

The first card body layer can comprise at least one antenna being configured to communicate with a remote device such as a payment terminal, said antenna preferably being connected to the electronic chip in a wired manner. The second card body layer can comprise at least one antenna being configured to communicate with a remote device such as a payment terminal, said antenna preferably being connected to the electronic chip in a wireless manner, preferably via a coil.

The antenna of the first card body layer and/or of the second card body layer can furthermore be connected to the reel tape, in particular to the further electrically conductive layer of the reel tape as being explained further below in a wired manner. For instance, the antenna could be connected via welding thermocompression, ACF adhesive, silver glue, etc., as it is well-known in the art.

It is preferred to provide at least one further electrically conductive layer. Said further electrically conductive layer is preferably arranged between the first card body layer and the reel tape when seen along the extension direction of the smart card and is configured to communicate with the antenna in the first card body layer and/or the second card body layer.

Said further electrically conductive layer is particularly preferably arranged between the first card body layer of the card body element and the dielectric layer of the reel tape when seen along the extension direction of the smart card. Such a smart card can be referred to as a dual interface smart card and is preferably used in payment applications.

Said dual interface smart card could be provided as a so-called coil-on-module smart card, wherein a communication between an antenna in the first card body layer and/or the second card body layer and the electronic chip is established by an inductive coupling, wherein the antenna in the first card body layer and/or the second card body layer acts as a booster for an antenna being provided on an electronic module comprising the electronic chip and preferably serves the purpose of enhancing a communication over long distances with a payment terminal for example.

The further electrically conductive layer preferably comprises a plurality of apertures being arranged along the longitudinal direction of the reel tape. Said plurality of apertures are furthermore preferably arranged at least partially congruent with the apertures of the first card body layer and, if applicable, with the apertures of the first adhesive element when seen along the extension direction. It is furthermore preferred that the electronic chips are at least partially arranged within the apertures of the further electrically conductive layer.

In the event that no such further electrically conductive layer is present, the smart card can be referred to as a simple face smart card module. Such a smart card is preferably used in mobile phone applications.

Hence, in another aspect of the present invention a smart card manufactured in the method according to the present invention is used in mobile phone applications, payment applications, etc.

The method according to the invention allows the manufacturing of smart cards having desired dimensions since the width and length of the smart cards depends on the width and the length of the reel tape, and wherein said width and length of the reel tape can be selected accordingly. As such, smart cards can be manufactured whose dimensions are smaller than the usual payment cards. These small dimensions of the smart card enables new uses of the smart cards. For instance, smart cards according to the invention could be used in slots of a bracelet, a watch or the like for payment transactions or mobile applications.

At least one encapsulation element that at least partially encapsulated the electronic chips is preferably provided. The encapsulation element preferably is a resin.

That is, the electronic chips can be at least partially encapsulated by a resin or the like. To this end it is preferred to use a resin that is well-known in the art such as a UV-curing resin, e.g. an epoxy resin or a urethane resin, or a thermal resin. Said encapsulation serves the purpose of protecting the electronic chips. However, it should be noted that no encapsulation of the electronic chips is needed. Instead, the card body layers are preferably arranged and configured such as to hermetically seal and thereby protect the electronic chips.

With respect to the extension direction the first card body layer preferably has a thickness that corresponds to or is close to a thickness of the encapsulation element. In other words, the first card body layer preferably has a thickness that is configured to protect the electronic chips, the adhesive element such as the glue, and the electrical connections. Furthermore, with respect to the extension direction, the second card body layer preferably has a thickness that meets a particular smart card standard. For instance, if the smart card to be manufactured corresponds to a 4FF SIM, it is preferred that the thickness of the smart card on reel is 0.67 millimeter +0.03-0.07 millimeter with respect to the extension direction. If the final form factor is not a SIM card but a wearable banking device for example the different thicknesses could be different.

The first card body layer and the second card body layer can be laminated into a single strip extending along the longitudinal direction of the reel tape. Alternatively, the first card body layer and the second card body layer can be laminated into two or more strips extending along the longitudinal direction of the reel tape and preferably parallel to one another.

That is, it is conceivable to provide one or more first card body layers as well as one or more second card body layers on the reel tape, wherein said one or more first and second card body layers have the shape of a strip or strips extending along the longitudinal direction of the reel tape. If two or more first card body layers are present, these two or more first card body layers can be arranged immediately adjacent or laterally spaced from one another when seen along a transverse direction extending perpendicularly to the longitudinal direction of the reel tape. Likewise, if two or more second card body layers are present, these two or more second card body layers can be arranged immediately adjacent or laterally spaced from one another with respect to the transverse direction. Any explanations made with regard to the first (second) card body layer preferably likewise apply to two or more first (second) card body layers and vice versa.

As such, it is furthermore preferred to provide the plurality of electronic chips as a single strip or as two or more strips extending along the longitudinal direction of the reel tape as well, and wherein each strip of electronic chips is at least partially arranged within a strip of the card body element.

Different arrangements and dimensions of the card body elements, the reel tape and the electronic chips are conceivable. For instance, when seen along the longitudinal direction of the reel tape, a pitch between successive electronic chips can be 4.75 millimeter or 9.5 millimeter or 14.25 millimeter. Other pitches are of course likewise conceivable and are preferably chosen with respect to the end-use application of the smart card and associated formats, if any. A width of the reel tape, i.e. an extension of the reel tape along the transverse direction extending perpendicular to the longitudinal direction, can be 35 millimeter or 70 millimeter or 150 millimeter. Different widths are of course likewise conceivable and again preferably depend on the desired final dimensions of the smart card.

The width of the first card body layer preferably essentially corresponds to the width of the reel tape when seen along the transverse direction. Alternatively, the width of the first card body layer is preferably smaller than the width of the reel tape when seen along the transverse direction.

The reel tape preferably comprises longitudinal sides extending along the longitudinal direction, and wherein a plurality of perforations are arranged along the longitudinal direction of the reel tape and in regions of the longitudinal sides of the reel tape.

The perforations are particularly preferably arranged in regions of the longitudinal sides of the dielectric layer of the reel tape and possibly furthermore also in regions of the longitudinal sides of the electrically conductive layer. That is to say, it is conceivable that the electrically conductive layer as well as the dielectric layer of the reel tape comprises perforations in the event that the electrically conductive layer is present in the regions of the longitudinal sides of the reel tape. However, it is likewise conceivable that only the dielectric layer of the reel tape comprises the perforations for instance in the event that only the dielectric layer is present in the regions of the longitudinal sides of the reel tape and in case that the electrically conductive layer has been removed from these regions e.g. during a pattern etching of contact sides.

Being arranged in regions of the longitudinal sides of the reel tape means that the perforations are arranged in proximity to the longitudinal sides of the reel tape and not, for instance, in a middle region of the reel tape.

It is conceivable that the perforations are provided in the region of only one longitudinal side of the reel tape, wherein the other longitudinal side of the reel tape lacks the perforations. Perforations on both longitudinal sides of the reel tape are however likewise conceivable.

The perforations can extend at least partially or entirely through the reel tape when seen along the extension direction. To this end it is particularly preferred that the perforations extend at least partially or entirely through the dielectric layer when seen along the extension direction. In the event that the perforations are present in the electrically conductive layer, it is preferred that said perforations extend at least partially or entirely through the electrically conductive layer when seen along the extension direction.

The perforations serve the purpose of conveying the reel tape along a transport direction of a module reel and are configured to be engaged by corresponding protrusions of the module reel. That is, the perforations correspond to so-called sprocket holes.

The first card body layer preferably comprises longitudinal sides extending along the longitudinal direction of the reel tape, and wherein a plurality of perforations are arranged along the longitudinal direction of the reel tape and in regions of the longitudinal sides of the first card body layer.

That is to say, the first card body layer can comprise perforations that serve the purpose of conveying the reel tape along the transport direction. Hence, the perforations of the first card body layer correspond to so-called sprocket holes as well. To this end, it is conceivable that both, the reel tape and the first card body layer, comprise the perforations. Alternatively, it is conceivable that only the first card body layer comprises the perforations.

The perforations are preferably generated in the first card body layer before the first card body layer is laminated to the reel tape. However, it is likewise conceivable that the perforations are generated in the card body layer after its lamination to the reel tape. Furthermore, in the event that the perforations are present in the first card body layer and in the reel tape, it is conceivable that the perforations are generated in the first card body layer and the reel tape after lamination of the card body layer to the reel tape and preferably simultaneously.

The second card body layer preferably defines a width with respect to the transverse direction of the reel tape. The width of the second card body layer can essentially correspond to the width of the reel tape or can be smaller than the width of the reel tape when seen along the transverse direction. Additionally or alternatively, the width of the second card body layer preferably corresponds to the width of the first card body layer or is larger than the width of the first card body layer when seen along the transverse direction. That is to say, it is preferred that the second card body layer covers the first card body layer when seen along the transverse direction. But it is also conceivable that the second card body layer has a width being smaller than the width of the first card body layer.

The plurality of electronic chips are preferably electrically personalized. Additionally or alternatively, a plurality of personalization elements are preferably provided on and/or in the second card body layer. Said personalization elements are preferably arranged at least partially congruent with the electronic chips when seen along the extension direction and are preferably graphical personalization elements and/or electrical personalization elements.

That is, an electrical personalization of the electronic chips can be done with a very high throughput due to the electronic chips being arranged on the reel tape and thus in a reel format. Consequently, an individual personalization of the electronic chips on individual smart cards as it is currently done in the state of the art can be dispensed with.

Furthermore, graphical personalization elements such as prints or embossings or the like can be generated on and/or in the second card body layer, preferably on its upper surface. These graphical personalization elements can again be generated with a high throughput due to the reel format.

Further personalization of the smart cards could be provided by the reel tape. For instance, the electrically conductive layer of the reel tape could be customized with branding of the final customer, whereby an electrical personalization element is generated, or it could be coloured, etc.

The method preferably further comprises the step of singulation, whereby individual smart cards comprising a single electronic chip are obtained. The singulation is preferably performed by cutting, laser, grinding, routing or water jet and/or in a single step or in two steps or more.

The singulation is particularly preferably performed into a particular format being associated with end-use of the smart card. For instance, it is preferred that the reel tape, the card body element(s) and the plurality of electronic chips are singulated into a form factor of a SIM card such as the 4FF format in the event that the smart card shall be used as a SIM card in a mobile phone. However, a singulation into other form factors or formats are likewise conceivable. For instance, the smart card can be manufactured in the format 1FF, ID1 UICC, 3FF, etc., if desired.

The individual smart cards preferably comprise a card body, and wherein the first card body layer and the second card body layer constitute said card body. Furthermore, and as mentioned earlier, the second card body layer preferably constitutes a bottom side of the smart card, and the electrically conductive layer of the reel tape preferably constitutes a top side of the smart card.

Consequently, it is preferred that a thickness of these components after lamination are compliant with standards of smart cards. For instance, if the smart cards shall be manufactured in the 4FF format, it is preferred that the smart card has a width of 12,3 mm ± 0,1 mm along the transverse direction and a height corresponding to a length along the longitudinal direction of 8,8 mm ± 0,1 mm and a thickness along the extension direction in the range of 0,67 mm + 0,03 mm/-0,07 mm.

Hence, the method according to the invention allows the direct manufacturing of smart cards that can be readily used in their intended final applications, and wherein manufacturing steps such as card bodies lamination or embedding into cavities of card bodies as it is the case in the prior art solutions are dispensed with. Thereby, the quantity of the needed raw materials is significantly reduced as well. Furthermore, the method according to the invention allows the manufacturing of the smart cards with standard equipment as it is currently used in the card industry.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a cross-sectional view of an electronic module of a smart card during manufacturing according to the method of the invention, wherein an electronic chip is provided on a reel tape;
- Fig. 2: shows a cross-sectional view of the electronic module according to figure 1, wherein a first card body layer is directly laminated onto the reel tape;
- Fig. 3: shows a cross-sectional view of the electronic module according to figure 1, wherein a first card body layer is laminated onto the reel tape via an adhesive element;
- Fig. 4: shows a cross-sectional view of a smart card comprising the electronic module according to figure 2, wherein a second card body layer is laminated onto the first card body layer;
- Fig. 5: shows a cross-sectional view of the smart card according to figure 3, wherein a second card body layer is laminated onto the first card body layer via an intermittent adhesive element;
- Fig. 6: shows a cross-sectional view of the smart card according to figure 3, wherein a second card body layer is laminated onto the first card body layer via a continuous adhesive element;
- Fig. 7: shows a top view on smart cards during manufacturing according to the method of the invention, wherein a plurality of electronic chips are arranged within a first card body layer being laminated on a reel tape;
- Fig. 8: shows a top view on smart cards during manufacturing according to the method of the invention, wherein a plurality of electronic chips are arranged within two first card body layers being laminated on a reel tape;
- Fig. 9: shows a top view on smart cards during manufacturing according to the method of the invention, wherein a plurality of electronic chips are arranged within a first card body layer being laminated on a reel tape;
- Fig. 10: shows a bottom view on smart cards during manufacturing according to the invention, wherein contact sides of the smart cards are visible;
- Fig. 11: shows a top view on a smart card being manufactured according to the method of the invention;
- Fig. 12: shows a bottom view of a smart card being manufactured according to the invention.

### DESCRIPTION OF PREFERRED EMBODIMENTS

Various aspects of the present invention shall be illustrated with reference to the figures.

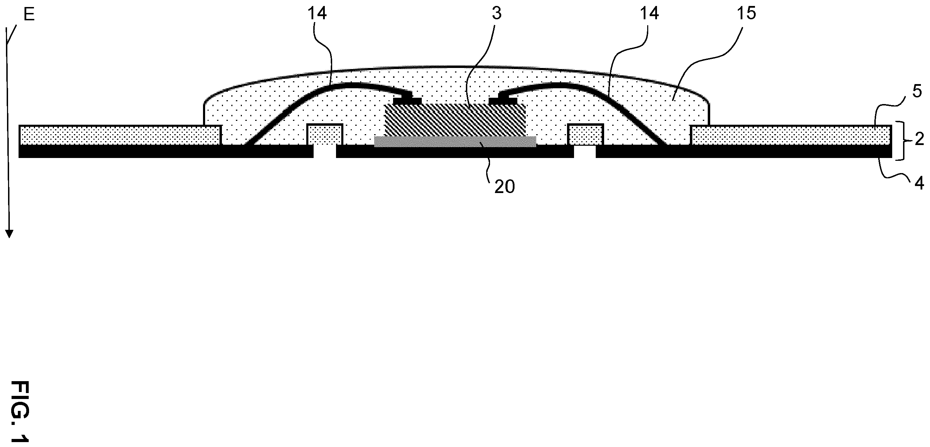

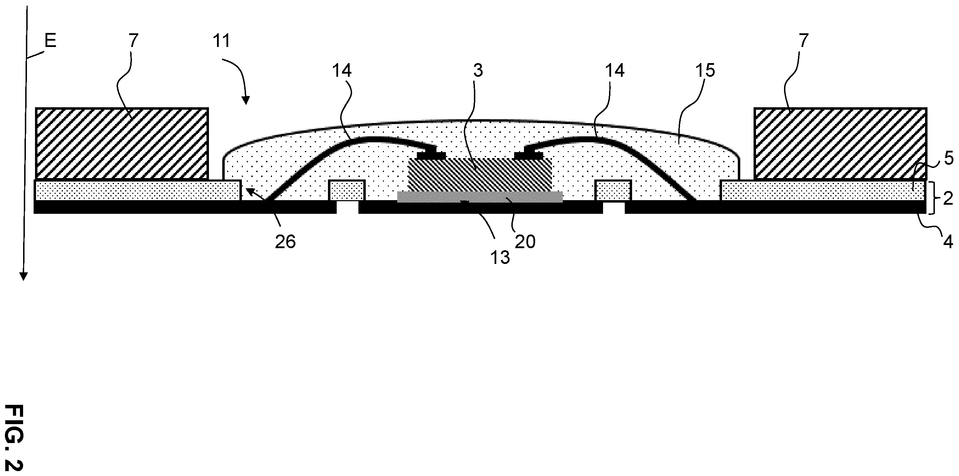

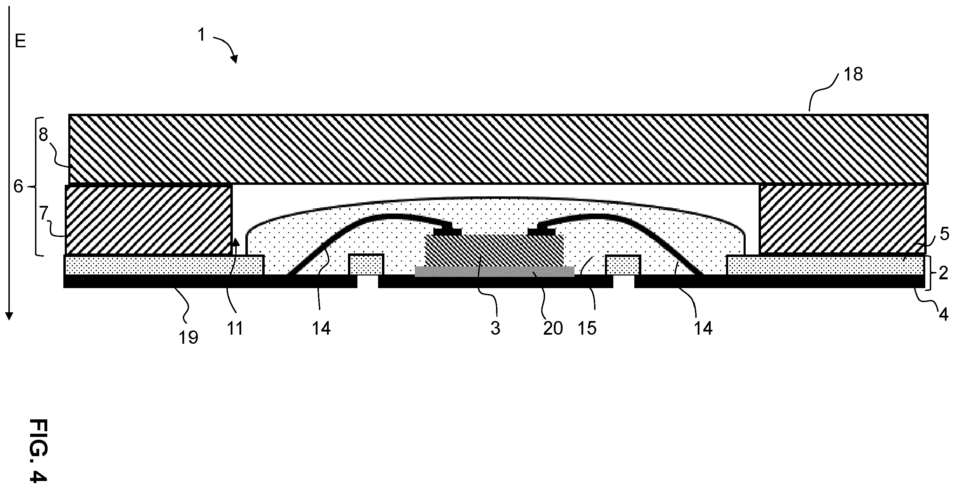

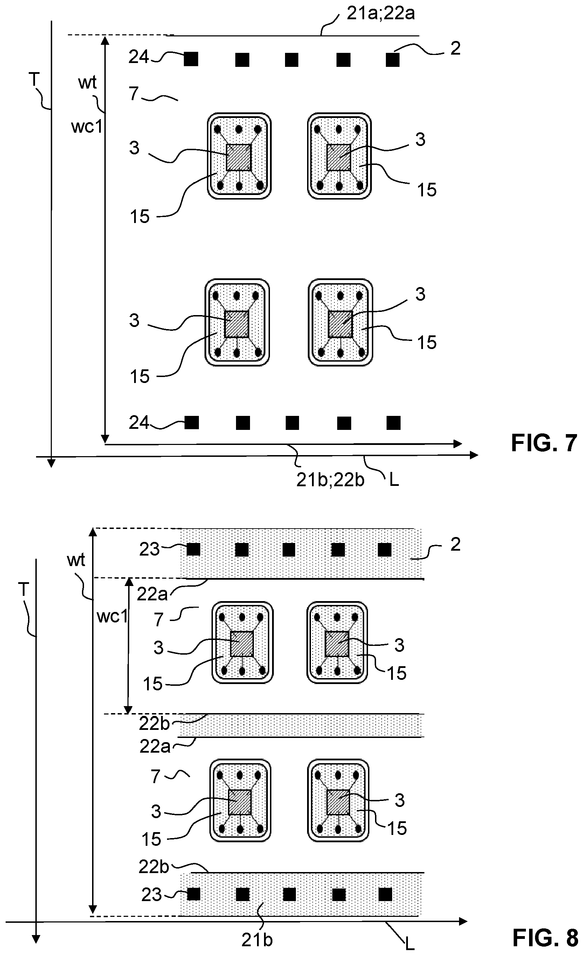

As follows from figures 1 to 6, the present invention is based on the insight that smart cards 1 such as SIM cards can be manufactured in reel, wherein an electronic chip 3 is arranged on a reel tape 2 (figure 1), wherein a first card body layer 7 is laminated onto a reel tape 2 (figures 2 to 3), and wherein a second card body layer 8 is laminated onto the first card body layer 7 (figures 4 to 6). The first card body layer 7 partially embeds the electronic chip 3, and the second card body layer 8 covers the electronic chip 3. The first card body layer 7 and the second card body layer 8 preferably constitute a card body 6 of the final smart card 1. The reel tape 2 comprises a dielectric layer 5 being arranged on an electrically conductive layer 4. Moreover, the reel tape 2 is of an elongated shape and extends along a longitudinal direction L, see figures 7 to 9.

The smart card 1 extends along an extension direction E that extends from a bottom side 18 of the smart card 1 towards a top side 19 of the smart card 1. Said extension direction E can be seen as a vertical direction of the smart card 1. In the depicted examples of figures 4 to 6, the electrically conductive layer 4 of the reel tape 2 provides the top side 19 of the smart card 1 and the second card body layer 8 provides the bottom side 18 of the smart card 1. With respect to the extension direction E of the smart card 1 the dielectric layer 5 is arranged below the electrically conductive layer 4, the first card body layer 7 is arranged below the dielectric layer 5, and the second card body layer 8 is arranged below the first card body layer 7.

In these figures the electrically conductive layer 4 of the reel tape 2 is a continuous layer that continuously extends along the longitudinal direction L of the reel tape 2. The dielectric layer 5 of the reel tape 2 is an intermittent layer that comprises a plurality of apertures 13 being arranged along the longitudinal direction L of the reel tape 2. These apertures 13 are also referred to as central windows or window holes and correspond to the area under the electronic chip 3 and the glue 20.Additionally, apertures 26 corresponding to bonding holes for the wire bonding are provided. Furthermore, the first card body layer 7 comprises a plurality of apertures 11 that are arranged along the longitudinal direction L of the reel tape 2. The electronic chips 3 are arranged on the electrically conductive layer 4 of the reel tape 2 and furthermore at least partially within apertures 13 of the dielectric layer 5 as well as within the apertures 11 of the first card body layer 7. As is readily evident from figures 1 to 6, the apertures 13 of the dielectric layer 5 are at least partially arranged congruent with the apertures 11 of the first card body layer 7 when seen along the extension direction E of the smart card 1. The second card body layer 8 is a continuous layer that continuously extends along the longitudinal direction L of the reel tape 2. In the depicted examples, the electronic chips 3 are electrically connected to the electrically conductive layer 4 of the reel tape 2 before lamination of the first card body layer 7 to the reel tape 2. In addition, the electronic chips 3 are electrically connected to the electrically conductive layer 4 of the reel tape 2 via wire bonding 14 as well as via an adhesive element 20 in the form of glue.

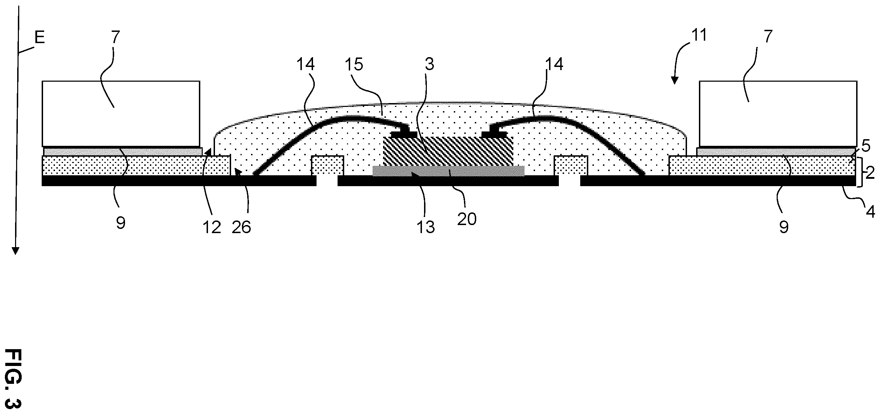

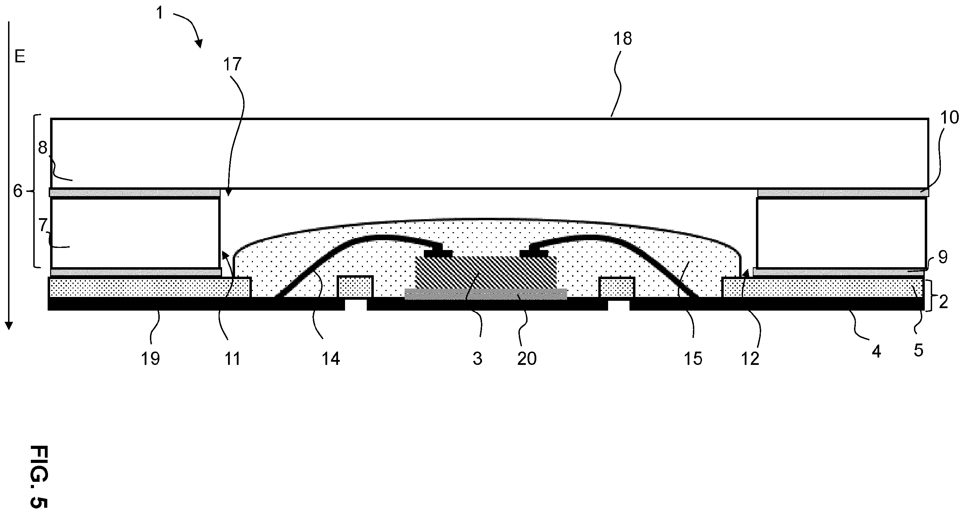

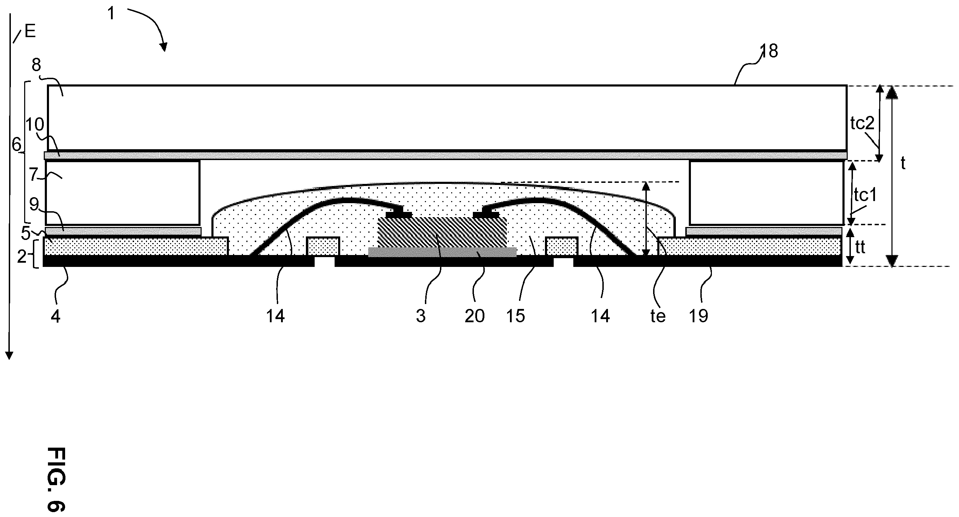

As mentioned initially, the first card body layer 7 is laminated to the reel tape 2, in particular onto the dielectric layer 5 of the reel tape 2. To this end it is possible to directly laminated the first card body layer 7 to the dielectric layer 5 without using an adhesive element, see figure 2. However, it is likewise conceivable to indirectly laminated the first card body layer 7 onto the dielectric layer 5 via at least a first adhesive element 9, see figure 3. Likewise, the second card body layer 8 can be laminated directly onto the first card body layer 7 in the absence of an adhesive element, see figure 4, or can be indirectly laminated onto the first card body layer 7 via at least a second adhesive element 10, see figures 5 and 6. In fact, by providing the first card body layer 5 and/or the second card body layer 18 as so-called pre-preg layer, the using of an additional adhesive element can be dispensed with. The first adhesive element 9 of all examples corresponds to an intermittent layer comprising a plurality of apertures 12 being arranged along the longitudinal direction L of the reel tape 2. The second adhesive element 10 however is provided as an intermittent layer comprising apertures 17, see figure 5, or as a continuous layer, see figure 6. Hence, when seen along the extension direction E, a lower surface of the second card body layer 8 is laminated directly (figure 4) or via an adhesive element (figures 5 and 6) to an upper surface of the first card body layer 7, and a lower surface of the first card body layer 7 is laminated directly (figure 4) or indirectly (figures 5 and 6) to an upper surface of the dielectric layer 5 of the reel tape 2.

In all embodiments there is provided an encapsulation element 15 that at least partially encapsulates the electronic chip 3. Here, said encapsulation element 15 is a resin which serves the purpose of protecting the electronic chip 3.

As follows from figures 2 to 6 and as indicated in figure 6, a thickness tc1 of the first card body layer 7 is close to a thickness te of the encapsulation element 15 when seen along the extension direction E. As follows from figures 4 to 6, a thickness tc2 of the second card body layer 8 is preferably chosen in order that a total thickness t of the smart card 1 on reel is in conformity with standard dimensions, for instance with the ETSI norm dimension in the case of a SIM card, and thus t is between 600 micrometer and 700 micrometer.

As follows from the figures, the reel tapes 2 are single-side reel tapes that already have the dimensions of the final smart card 1, here of a 4FF SIM. A width wt of the reel tape 2 with respect to the transverse direction T running perpendicularly to the longitudinal direction L of the reel tape 2 in the event of the 4F SIMs thus preferably is 35mm, 70mm or 150mm.

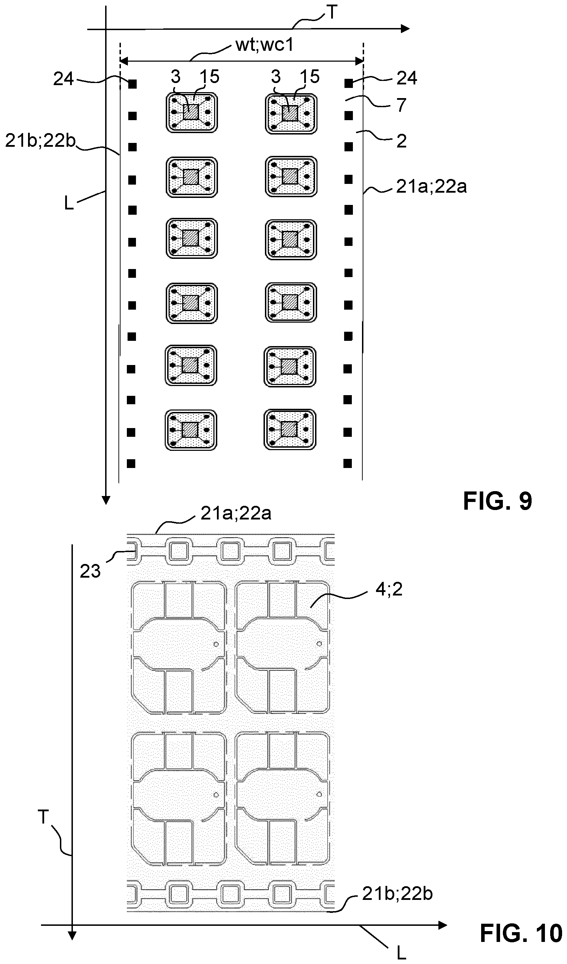

As furthermore follows from these figures, the reel tape 2 and the first card body layer 7 comprise in each case longitudinal sides 21a, 21b; 22a, 22b extending along the longitudinal direction L, and wherein a plurality of perforations 23 are arranged in the reel tape 2 along the longitudinal direction L of the reel tape 2 and in regions of the longitudinal sides 21a, 21b of the reel tape 2 (see figure 10) and/or a plurality of perforations 24 are arranged in the first card body layer 7 along the longitudinal direction L of the reel tape 2 and in regions of the longitudinal sides 22a, 22b of the first card body layer 7 (see figures 7 and 9).

That is, figures 7 and 9 depict perforations 24 that extend through the first card body layer 7 with respect to the extension direction E. Figure 8 depicts perforations 23 that extend through the dielectric layer 5 of the reel tape 2 with respect to the extension direction E. Figure 10 depicts a reel tape 2 comprising perforations 23 that extend through the electrically conductive layer 4 and the dielectric layer 5 of the reel tape 2 with respect to the extension direction E.

To this end it is noted that different extensions of the first card body layer 7 and thus also of the second card body layer 8 with respect to the transverse direction T are conceivable, see figures 7 to 9. For instance, figures 7 and 9 depict a first card body layer 5 that extends along an entire width wt of the reel tape 2 with respect to the transverse direction T. That is, a width wc1 of the first card body layer 5 corresponds to the width wt of the reel tape 2 when seen along the transverse direction T. The longitudinal sides 22a, 22b of the first card body layer 7 are arranged congruent with the longitudinal sides 21a, 21b of the reel tape 2. This is in contrast to the first card body layer 5 of figure 8, which has a width wc1 being smaller than the width wt of the reel tape 2 when seen along the transverse direction T.

As mentioned earlier, the electronic chips 3 are arranged within apertures 11 of the first card body layer 7 and within apertures 13 of the dielectric layer 5. These apertures 11; 13 are arranged sequentially when seen along the longitudinal direction L of the reel tape 2, see figures 7 to 9. Moreover, these apertures 11; 13 can be arranged in several lines. In fact, figures 7 and 9 depict a single first card body layer 7 comprising electronic chips 3, 3a, .. being arranged within apertures 11 of the first card body layer 7 that are arranged in two parallel lines. Figure 8 however depicts two first card body layers 7, 7a, the first card body layer 7 and a further first card body layer 7a, that extend parallel to one another along the longitudinal direction L of the reel tape 2. Said further first card body layer 7a is laminated to the reel tape 2 and comprises a plurality of first apertures 11 receiving a plurality of electronic chips 3, 3a, ... as it is the case with the first card body layer 7. Here, said first card body layer 7 and the further first card body layer 7a are arranged laterally spaced from one another when seen along the transverse direction T of the reel tape 2. In other words, the first card body layer 7 is laminated into strips extending along the longitudinal direction L of the reel tape 2 and being parallel to one another. Although not depicted, it is preferred to laminate the second card body layer 8 to the first card body layer 7 in strips as well. That is, a second card body layer 8 in the form of a first strip is preferably laminated onto the first card body layer 7, and a further second card body layer 8a in the form of a second strip is preferably laminated onto the further first card body layer 7a. An advantage associated with the embodiment depicted in figure 8 is the an easier handling of the reel tape 2 during the different manufacturing steps since said embodiment comprises a reel tape 2 having a thickness tt at the location of its perforations 23 or sprocket holes, respectively, being standard for the equipment such as the module reel being typically used during the manufacturing of the smart cards 1 according to the invention. In other words, in the region of the perforations 23 or sprocket holes, there is only the reel tape 2 being of a thickness tt that corresponds to an original thickness of commercially available reel tapes.

With respect to figures 1 to 10 it is furthermore noted that the reel tape 2 and the apertures 13 in the dielectric layer 5, which can also be called window holes, enable a chip bonding on the reel tape 2 through these apertures 13 or window holes. These apertures 13 or window holes furthermore enable a wire bonding and finally also a filling with an encapsulation element 15 such as a protective resin through these same apertures 13 or window holes.

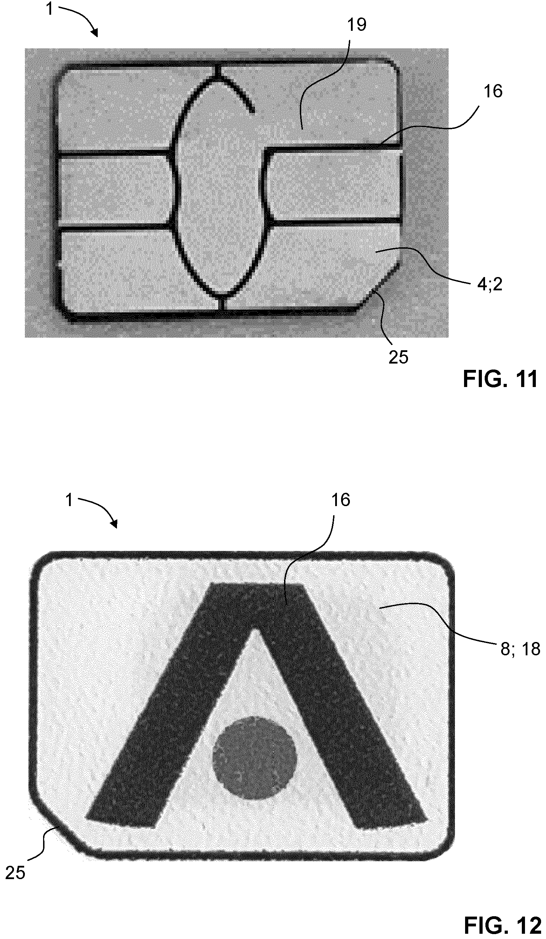

As follows from figures 11 and 12, the inventions allows the manufacturing of smart cards 1 comprising electrical and graphical personalization elements 16 that are produced in reel. The contact side of the reel tape 2, i.e. the electrically conductive layer 4 providing the top side 19, could be customized with the branding of the final customers by etching for example, see figure 11. Figure 12 depicts another example of personalization element 16, wherein a mobile phone operator logo or the like is printed on the bottom side of the SIM card 1 and thus here to the second card body layer 8, with inkjet for example. Other examples are a bar code or QR code being printed or marked by laser. Besides, and as follows from figures 11 and 12, the method according to the inventions allows the manufacturing of smart cards 1 including a chamfer 25 in a bottom corner.

After the plurality of smart cards 1 are produced in reel, they are singulated, whereby the individual smart cards 1 comprising a single electronic chip 3 and as depicted in figures 11 and 12 are obtained. That is, in a preferably final step of the method according to the invention singulation of the smart cards 1 is done so as to remove the individual smart cards 1 from the reel. The singulation serves the purpose of obtaining the individual smart cards 1 in the desired format or size, for instance in the x and y final SIM dimension being in conformity with ETSI, i.e. 12.3mm x 8.8mm. The singulation can be done with laser, milling routing, punch, waterjet or other technics that are well-known in the art.

Hence, the present invention allows an environment friendly manufacturing of a smart card 1 such as a SIM with reduced costs since no embedding, no printing, and no separate card body manufacturing is required and which furthermore allows an easier electrical or graphical personalization in reel to reel.

**LIST OF REFERENCE SIGNS**

| | | | |
|---|---|---|---|
| 1 | smart card | 21a, 21b | longitudinal side |
| 2 | reel tape | 22a, 22b | longitudinal side |
| 3 | electronic chip | 23 | perforation |
| 4 | electrically conductive layer | 24 | perforation |
| 5 | dielectric layer | 25 | chamfer |
| 6 | card body | 26 | bonding hole |
| 7 | first card body layer | | |
| 8 | second card body layer | L | longitudinal direction |
| 9 | first adhesive element | E | extension direction |
| 10 | second adhesive element | T | transverse direction |
| 11 | apertures | tc1 | thickness first card body layer |
| 12 | apertures | tc2 | thickness second card body layer |
| 13 | apertures | | |
| 14 | wires | t | total thickness |
| 15 | encapsulation element | te | thickness encapsulation element |
| 16 | personalization element | | |
| 17 | apertures | tt | thickness reel tape |
| 18 | bottom side | wt | width reel tape |
| 19 | top side | wc1 | width first card body layer |
| 20 | adhesive element | | |

## Claims

1. A method of manufacturing a smart card (1) such as a SIM card extending along an extension direction (E), the method comprising the steps of:
- Providing at least one reel tape (2) extending along a longitudinal direction (L), and
- Providing a plurality of electronic chips (3) on the reel tape (2),
wherein the reel tape (2) comprises at least one electrically conductive layer (4) and at least one dielectric layer (5), and
wherein the electronic chips (3) are in connection with the electrically conductive layer (4) of the reel tape (2),
**characterized in that** the method further comprises the step of laminating at least a first card body layer in reel (7) to the reel tape (2) and laminating at least a second card body layer in reel (8) to the first card body layer (7),
wherein the first card body layer (7) at least partially embeds the electronic chips (3), and
wherein the second card body layer (8) covers the electronic chips (3) towards an outside.

2. The method according to claim 1, wherein the first card body layer (7) is laminated onto the dielectric layer (5) of the reel tape (2), and
wherein the first card body layer (7) preferably is laminated directly onto the dielectric layer (5) in the absence of an adhesive element or is laminated indirectly onto the dielectric layer (5) via at least a first adhesive element (9).

3. The method according to any one of the preceding claims, wherein the second card body layer (8) is laminated directly onto the first card body layer (7) in the absence of an adhesive element or is laminated indirectly onto the first card body layer (7) via at least a second adhesive element (10).

4. The method according to any one of the preceding claims, wherein the first card body layer (7) comprises a plurality of apertures (11) that are arranged along the longitudinal direction (L) of the reel tape (2), and wherein in each case one of the electronic chips (3) is arranged in one of the apertures (11) of the first card body layer (7), and/or
wherein the second card body layer (8) is a continuous layer that continuously extends along the longitudinal direction (L) of the reel tape (2).

5. The method according to any one of claims 2 to 4, wherein the first adhesive element (9) and/or the second adhesive element (10) are provided as layers that continuously extend along the longitudinal direction (L) of the reel tape (2), or
wherein the first adhesive element (9) and/or the second adhesive element (10) are provided as intermittent layers that comprise a plurality of apertures (12; 17) being arranged along the longitudinal direction (L) of the reel tape (2), said apertures (12; 17) preferably being arranged at least partially congruent with the apertures (11) of the first card body layer (7) when seen along the extension direction (E) of the smart card.

6. The method according to any one of the preceding claims, wherein the first card body layer (7) and/or the second card body layer (8) comprises or consists of at least one polymer and/or at least one paper-based compound, the polymer preferably being a thermoplastic polymer and/or a transparent polymer, or
wherein the first card body layer (7) and/or the second card body layer (8) comprise or consist of pre-impregnated fibers and a partially cured polymer matrix when being laminated to the reel tape (2).

7. The method according to any one of the preceding claims, wherein the electrically conductive layer (4) of the reel tape (2) is a continuous layer that continuously extends along the longitudinal direction (L) of the reel tape (2), and/or
wherein the dielectric layer (5) of the reel tape (2) is a continuous layer that continuously extends along the longitudinal direction (L) of the reel tape (2) or is an intermittent layer that comprises a plurality of apertures (13) being arranged along the longitudinal direction (L) of the reel tape (2).

8. The method according to any one of the preceding claims, wherein the electronic chips (3) are electrically connected to the electrically conductive layer (4) of the reel tape (2) before or after lamination of the first card body layer (7) to the reel tape (2), and/or
wherein the electronic chips (3) are electrically connected to the electrically conductive layer (4) of the reel tape (2) via wire bonding (14) or in a flip chip process.

9. The method according to any one of the preceding claims, wherein the electronic chips (3) are arranged on the electrically conductive layer (4) of the reel tape (2) and preferably furthermore at least partially within apertures (13) of the dielectric layer (5), or
wherein the electronic chips (3) are arranged on the dielectric layer (5) of the reel tape (2).

10. The method according to any one of the preceding claims, wherein the first card body layer (7) comprises at least one antenna being configured to communicate with a remote device such as a payment terminal, said antenna preferably being connected to the electronic chip (3) in a wired manner, and/or
wherein the second card body layer (8) comprises at least one antenna being configured to communicate with a remote device such as a payment terminal, said antenna preferably being connected to the electronic chip (3) in a wireless manner, preferably via a coil.

11. The method according to claim 10, wherein at least one further electrically conductive layer is provided,
wherein said further electrically conductive layer is arranged between the first card body layer and the reel tape (2) when seen along the extension direction of the smart card (1) and is configured to communicate with the antenna in the first card body layer and/or the second card body layer (8).

12. The method according to any one of the preceding claims, wherein at least one encapsulation element (15) that at least partially encapsulated the electronic chips (3) is provided, the encapsulation element preferably being a resin.

13. The method according to any one of the preceding claims, wherein the first card body layer (7) and the second card body layer (8) are laminated into a single strip extending along the longitudinal direction of the reel tape (2), or
wherein the first card body layer (7) and the second card body layer (8) are laminated into two or more strips extending along the longitudinal direction of the reel tape (2) and preferably parallel to one another.

14. The method according to any one of the preceding claims, wherein the plurality of electronic chips (3) are electrically personalized, and/or
wherein a plurality of personalization elements (16) are provided on and/or in the second card body layer (8), the personalization elements (16) are preferably arranged at least partially congruent with the electronic chips (3) when seen along the extension direction (E) and/or are at least one of graphical personalization elements and electrical personalization elements.

15. The method according to any one of the preceding claims, further comprising the step of singulation, whereby individual smart cards (1) comprising a single electronic chip (3) are obtained, and
wherein the singulation is preferably performed by cutting, laser, grinding, routing or water jet and/or in a single step or in two steps or more.
